(19) Europäisches Patentamt
European Patent Office
Office européen des brevets

(11) EP 0 536 062 B1

(12) **FASCICULE DE BREVET EUROPEEN**

(45) Date de publication et mention de la délivrance du brevet:
**30.12.1998 Bulletin 1998/53**

(51) Int Cl.[6]: **G06F 17/14**

(21) Numéro de dépôt: **92420332.6**

(22) Date de dépôt: **28.09.1992**

(54) **Procédé et circuit de traitement de données par transformée cosinus**

Verfahren und Vorrichtung zur Datenverarbeitung mittels Kosinustransformation

Cosina transform data processing method and apparatus

(84) Etats contractants désignés:
**DE FR GB IT**

(30) Priorité: **30.09.1991 FR 9112277**

(43) Date de publication de la demande:
**07.04.1993 Bulletin 1993/14**

(73) Titulaire: **SGS-THOMSON MICROELECTRONICS S.A.**
**94250 Gentilly (FR)**

(72) Inventeur: **Henry, Michel**
**F-38120 Le Fontanil (FR)**

(74) Mandataire: **de Beaumont, Michel**
**1bis, rue Champollion**
**38000 Grenoble (FR)**

(56) Documents cités:
**WO-A-88/07725**

- **PROCEEDINGS OF THE 1990 IEEE INT. SYMP. ON CIRCUITS AND SYSTEMS vol. 2/4 , 1 Mai 1990 , NEW ORLEANS, US pages 1620 - 1623 U.SIÖSTRÖM ET AL. 'DISCRETE COSINE TRANSFORM CHIP FOR REAL-TIME VIDEO APPLICATIONS'**
- **PROCEEDINGS OF TECNON 87 " COMPUTERS AND COMMUNICATIONS TECHNOLOGY TOWARD 2000" IEEE COMPUTER SOCIETY PRESS, NEW YORK US vol. 2/3 , 25 Août 1987 , SEOUL, KOREA pages 595 - 599 ARIE HEIMAN ET AL 'A UNIVERSAL REAL TIME TRANSFORMER FOR IMAGE CODING'**
- **PROCEEDINGS OF THE 1990 INT. SYMP. ON CIRCUITS AND SYSTEMS; IEEE COMP. SOCIETY PRESS, NEW YORK, US vol. 3/4 , 1 Mai 1990 , NEW ORLEANS, US pages 2373 - 2376 YUK-HEE CHAN ET AL. 'A NEW CONVOLUTION STRUCTURE FOR THE REALISATION OF THE DISCRETE COSINE TRANSFORM'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 536 062 B1

Printed by Jouve, 75001 PARIS (FR)

## Description

La présente invention concerne un procédé et un circuit de traitement numérique de signal pour accomplir une fonction de transformation appelée "transformation cosinus discrète", souvent désignée dans la littérature technique par le sigle anglo-saxon DCT.

Ce type de transformation fait correspondre une matrice (un bloc) de valeurs numériques de sortie ou coefficients à une matrice de valeurs numériques d'entrée. Cette transformation est particulièrement utile pour effectuer de la compression d'images pour une transmission à un débit plus élevé que celui qui serait possible si les signaux correspondants étaient envoyés sans transformation.

La transformation cosinus n'effectue en elle-même aucune compression d'information ; c'est un codeur placé en aval du circuit de transformation qui fait la compression. Mais le circuit de transformation facilite la compression en fournissant à l'entrée du codeur des informations faciles à comprimer. Ce circuit de transformation trouve son application la plus courante dans la transmission numérique d'images en noir et blanc ou en couleurs et c'est en se référant à cet exemple que la présente invention sera décrite. Ainsi, la matrice de valeurs numériques d'entrée correspondra à une matrice de pixels. Pour réaliser la transformation cosinus, on décompose l'image ou la trame que l'on cherche à transmettre en blocs de n rangées et n colonnes, chaque point du bloc correspondant à un pixel représenté par une valeur numérique codée par exemple sur huit bits. Cette valeur correspond par exemple à la luminance ou à une composante de chrominance du pixel.

Au bloc de nxn pixels, la transformation cosinus fait correspondre un bloc de nxn coefficients. On appelera f(x,y) la valeur du pixel de coordonnées x et y dans le bloc. On appelera F(u,v) le coefficient calculé selon la transformation cosinus et placé à l'intersection de la ligne u et de la colonne v dans le bloc transformé. Dans le cas le plus courant n=8 et x, y, u et v sont compris entre 0 et 7.

Dans toute la description suivante, on considérera seulement ce cas particulier de blocs de 8x8 pixels. L'homme de l'art pourra facilement déduire ou trouver dans des ouvrages spécialisés les formules correspondantes pour des blocs de nxn pixels. Ainsi, dans le cas particulier considéré, une transformation cosinus s'explicite par la relation suivante :

$$F(u,v) = (1/K) \sum_{x=0}^{7} \sum_{y=0}^{7} f(x,y) \cdot c(u) \cdot \cos[(2x+1)u\pi/16] \cdot c(v) \cdot \cos[(2y+1)v\pi/16] \quad (1)$$

Dans cette formule :

K est un coefficient de normalisation qui s'exprime comme une puissance entière de 2 ;
x,y sont les coordonnées spatiales d'un pixel du bloc de départ ;
u et v sont les coordonnées spatiales d'un coefficient du bloc transformé ;
f(x,y) est la valeur d'un pixel du bloc de départ ;
F(u,v) est la valeur d'un coefficient de la transformée ;

$c(u), c(v) = 1/\sqrt{2}$ pour $u,v = 0$
$= 1$ pour $u,v \neq 0$.

La puissance de calcul de l'opérateur DCT à réaliser dépend du nombre de blocs à traiter par seconde. Pour des images de télévision classiques ou haute définition, il faut traiter plusieurs centaines de kiloblocs par seconde et pour cela, on a recours à des circuits intégrés spécialisés mettant en oeuvre des fonctions algorithmiques complexes, tels que l'algorithme de Byong Gi Lee. Ces circuits permettent d'effectuer des traitements extrêmement rapides mais présentent l'inconvénient de nécessiter de nombreux composants pour effectuer en parallèle diverses opérations et occupent donc une surface importante sur un circuit intégré.

Des exemples de circuits classiques de calcul de DCT apparaissent par exemple dans "Proceedings of the 1990 IEEE Int. Symp. on Circuits and Systems, vol. 2/4, 1 mai 1990, New Orleans (USA), pages 1620-1623, U.Siöström et al : "Discrete Cosine Transform Chip for Real Time Video Applications" ; et dans "Proceedings of TECNON 87, IEEE Computers Society Press, New York (USA), Vol. 2/3, 25 août 1987, Seoul (Korea), pages 595-599, Aire Heiman et al : "A Universal Real Time Transformer for Image Coding".

Par habitude, on utilise également de tels circuits quand le problème à résoudre est plus simple et que l'on cherche seulement à traiter un plus faible nombre de blocs par seconde, ce qui est par exemple le cas dans des applications de traitement d'image du type visiophone pour lesquelles un traitement de l'ordre de 10 kiloblocs par seconde semble suffisant.

Ainsi, un objet de la présente invention est de prévoir un procédé et un circuit de traitement d'informations par transformée cosinus discrète réalisable sous forme de circuit intégré de faible dimension.

Pour atteindre cet objet, la présente invention prévoit un procédé de traitement de données par transformation cosinus discrète (DCT) faisant correspondre à un tableau f(x,y) de NxN données un tableau F(u,v) de NxN coefficients selon la relation suivante :

$$F(u,v) = (1/K) \sum_{x=0}^{N-1} \sum_{y=0}^{N-1} f(x,y)\cdot p(x,u)\cdot p(y,v)$$

où

K est une puissance de 2 constante,
x,y désignent les coordonnées d'une donnée dans le tableau de données,
u,v désignent les coordonnées d'un coefficient dans le tableau de coefficients,

$$p(x,u) = c(u)\cdot\cos[(2x+1)u\pi/2N]$$

$$p(y,v) = c(v)\cdot\cos[(2y+1)v\pi/2N]$$

$c(u)$, $c(v) = 1/\sqrt{2}$ pour $u,v = 0$
$= 1$ pour $u,v \neq 0$.

consistant à déterminer séquentiellement chaque coefficient F(u,v) pour un couple de coordonnées u,v en réalisant les étapes suivantes : rechercher dans une table pour un premier couple x,y la valeur absolue et le signe du coefficient P=p(x,u)·p(y,v) ; multiplier la valeur absolue de P par f(x,y) ; introduire le résultat de la multiplication additivement ou soustractivement dans un accumulateur en fonction dudit signe ; et répéter l'opération pour toutes les valeurs du couple x,y et extraire le résultat fourni par l'accumulateur.

La présente invention prévoit aussi un circuit de traitement de données par transformée cosinus discrète faisant correspondre à un tableau f(x,y) de NxN données un tableau F(u,v) de NxN coefficients, selon la relation suivante :

$$F(u,v) = (1/K) \sum_{x=0}^{N-1} \sum_{y=0}^{N-1} f(x,y)\ p(x,u)\ p(y,v)$$

où

K est une puissance de 2 constante,
x,y désignent les coordonnées d'une donnée dans le tableau de données,
u,v les coordonnées d'un coefficient dans le tableau de coefficients,

$$p(x,u) = c(u)\cdot\cos[(2x+1)u\pi/2N]$$

$$p(y,v) = c(v)\cdot\cos[(2y+1)v\pi/2N]$$

$c(u)$, $c(v) = 1/\sqrt{2}$ pour $u,v = 0$
$= 1$ pour $u,v \neq 0$,

caractérisé en ce qu'il comprend

une mémoire du tableau de données
une mémoire des produits

$$P = |\cos[n(x,u)\pi/2N]\cos[n(y,v)\pi/2N]| \;;$$

avec :

$$p(x,u) = Sgn[p(x,u)]\cdot|\cos[n(x,u)\pi/2N]| \;,$$

$$p(y,v) = Sgn[p(y,v)]\cdot|\cos[n(y,v)\pi/2N]| \,,$$

où n(x,u) et n(y,v) sont des entiers compris entre 1 et N-1 ;
une table des signes de p(x,u) et p(y,v) et des valeurs de n(x,u) et de n(y,v) adressant la mémoire des produits ;
un générateur de coordonnées fournissant séquentiellement des couples de valeur (u,v) et, pour chaque couple (u,v), toutes les valeurs des couples (x,y) ;
un multiplieur effectuant le produit de P par une combinaison des données de la mémoire de données ; et
un totaliseur effectuant une soutraction ou une addition du résultat de la multiplication avec les résultats précédents en fonction du signe fourni par la table de signes.

Réciproquement, la présente invention prévoit un circuit de traitement de coefficients par transformée cosinus discrète inverse faisant cerrespondre à un tableau de NxN coefficients (F(u,v)) un tableau de NxN données (f(x,y)) selon la relation suivante :

$$f(x,y)=1/K\sum_{u}\sum_{v} F(u,v)\cdot c(u)\cdot\cos[(2x+1)u\pi/16]\cdot c(v)\cdot\cos[(2y+1)v\pi/16]$$

où

K est une puissance de 2 censtante,
x,y désignent les coordonnées d'une donnée dans le tableau de données,
u,v les coordonnées d'un coefficient dans le tableau de coefficients,

c(u), c(v) = $1\sqrt{2}$ pour u,v = 0
= 1 pour u,v $\neq$ 0.

Ce circuit comprend une mémoire du tableau de coefficients ; une mémoire des produits $P = \cos[n(x,u)\pi/2N]\cdot\cos[n(y,v)\pi/2N]$, où n(x,u) et n(y,v) sont des entiers compris entre 1 et (N/2)-1 ; une table des signes de $\cos[n(x,u)\pi/2N]$ et de $\cos[n(y,v)\pi/2N]$, et de n(x,u) et de n(y,v) ; un générateur de coordonnées fournissant séquentiellement des couples de valeurs (x,y) correspondant au 1er quadrant du tableau de données ainsi que des signaux par(u) et par(v) égaux à +1 ou -1 selon que u et v sont pair ou impair et, pour chaque couple (x,y), toutes les valeurs des couples (u,v) ; un multiplieur effectuant le produit de P par une combinaison des coefficients de la mémoire de coefficients ; et quatre totaliseurs effectuant une soutraction ou une addition du résultat de la multiplication avec les résultats précédents en fonction du signe fourni par la table de signes et des valeurs de par (u) et de par (v) pour fournir respectivement f(x, y), f(x',y), f(x,y') et f(x',y'), où x'=N-1-x et y'=N-1-y.

Ces objets, caractéristiques et avantages ainsi que d'autres de la présente invention seront exposés en détail dans la description suivante de modes de réalisation particuliers faite en relation avec les figures jointes parmi lesquelles :

la figure 1 représente un premier mode de réalisation de la présente invention ;
la figure 2 est un schéma illustratif d'un bloc destiné à faire comprendre le procédé mis en oeuvre dans un deuxième mode de réalisation de la présente invention ;
la figure 3 représente un deuxième mode de réalisation de la présente invention ;
la figure 4 représente un tableau de valeurs de coefficients pour diverses valeurs de u et de x ; et
la figure 5 représente un circuit de détermination de transformée cosinus discrète inverse.

La présente invention se base sur une analyse de la formule (1) ci-dessus de la transformée cosinus discrète (DCT). Alors que les procédés de l'art antérieur et les circuits pour les mettre en oeuvre visaient essentiellement à effectuer en parallèle le plus grand nombre d'opérations possibles au coût d'une multiplication des composants électroniques utilisés, la présente invention vise à réaliser ces opérations en série de la façon la plus simple possible et en utilisant le moins de composants électroniques possibles tout en obtenant une puissance de calcul suffisante pour traiter des séquences d'images comprenant par exemple de l'ordre de quelques dizaines de kiloblocs par seconde.

La formule (1) ci-dessus peut se réécrire

$$F(u,v) = 1/K \sum_{x} \sum_{y} f(x,y) \cdot P(x,u,y,v)$$

où

$P(x,u,y,v) = p(x,u)p(y,v)$ avec :

$$p(x,u) = c(u) \cdot \cos[(2x+1)u\pi/16]$$

$$= \mathrm{Sgn}[p(x,u)] \cdot |\cos[n(x,u)\pi/16]| \qquad (2)$$

et

$$p(y,v) = c(v) \cdot \cos[(2y+1)v\pi/16]$$

$$= \mathrm{Sgn}[p(y,v)] \cdot |\cos[n(y,v)\pi/16]| \qquad (3)$$

ou $n(x,u)$ ou $n(y,v) = 1$ à 7 et

$\mathrm{Sgn}[p(x,u)]$ ou $\mathrm{Sgn}[p(y,v)] = \pm 1$ désigne le signe de p.

Dans ces formules, en effet :

si $u=0$, le cosinus est égal à 1 et $p(x,u)=c(u)=1/\sqrt{2}=\cos 4\pi/16$,

si $u \neq 0$, $c(u)=1$ et $p(x,u)=\cos[(2x+1)u\pi/16]$.

Il en est de même pour c(v) et p(y,v).

Ceci signifie que p(x,u) ou p(y,v)) est toujours égal à la valeur absolue du cosinus d'un arc du premier quadrant multiple de n/16 affectée d'un signe positif ou négatif. En conséquence, chaque valeur de F(u,v) correspond à la somme de 64 produits de f(x,y) par un coefficient P du type valeur absolue de $\cos[n(x,u)\pi/16] \cdot \cos[n(y,v)\pi/16]$ affecté d'un signe positif ou négatif. Par ailleurs, |P| prend 49 valeurs différentes.

Ainsi, la présente invention propose de mémoriser dans des tables, d'une part, le signe, d'autre part, la valeur absolue de chacun des produits $\cos[n(x,u)\pi/16] \cdot \cos[n(y,v)\pi/16]$ pour servir de base au traitement de DCT. Plus particulièrement, la présente invention propose d'utiliser dans un premier étage de mémoire deux tables dont l'une reçoit la valeur courante de x et de u et fournit n(x,u) et Sgn(x,u) et dont l'autre reçoit la valeur courante de y et de v et fournit n(y,v) et Sgn(y,v). Les valeurs de n(x,u) et de n(y,v) servent ensemble d'adresse à un deuxième étage de mémoire qui contient les valeurs absolues de P (produits de cosinus). En reprenant les expressions précédentes, on notera que, dans le cas particulier considéré de blocs 8x8, les tables sont de relativement petites dimensions (64 mots de 4 bits pour chacune des premières tables et 49 mots de typiquement 12 bits pour le deuxième étage de mémoire).

La figure 1 est un schéma sous forme de blocs représentant un premier mode de réalisation de circuit de DCT selon la présente invention.

Les pixels du bloc x,y à traiter sont mémorisés dans une mémoire 1 qui contient initialement les 64 pixels du bloc 8*8 à traiter. En pratique, pour éviter les pertes de temps lors de la mémorisation du bloc suivant, on aura intérêt à doubler la capacité de cette mémoire et à la munir d'un double accès. Pendant que l'on traite un bloc, le suivant sera acquis simultanément selon des techniques classiques.

Une mémoire morte 3 contient tous les produits

$$P = |P(x,u,y,v)| = |\cos[n(x,u)\pi/16] \cdot \cos[n(y,v)\pi/16]|,$$

c'est-à-dire 49 coefficients. Un générateur de coordonnées y, x, u, v fournit séquentiellement les 64 combinaisons de

valeurs de u et v et, pour chaque couple (u,v), balaye en 64 coups d'horloge les 64 valeurs possibles de x,y, c'est-à-dire les 64 pixels de la mémoire de bloc 1. On notera que l'ordre de balayage des coordonnées x,y est quelconque, mais que l'ordre de balayage des couples (u,v) sera choisi en fonction de l'ordre que l'on veut obtenir en sortie du circuit. Par exemple, si l'on veut fournir une sortie conforme à la norme CCITT H261, le balayage de la matrice u,v se fera en zigzag.

Une table 7 fournit pour chaque couple x,u la valeur correspondante du signe de p(x,u) (appelé ci-après Sgn[p(x, u)] ou plus simplement Sgn(x,u)). Cette table fournit également la moitié n(x,u) de l'adresse de la mémoire 3. Une table 9 remplit des fonctions similaires pour y et v.

Pour chaque couple x, y, un multiplieur 11 fournit le produit de la valeur f(x,y) du pixel en cours par P. Ce produit est envoyé à un total isateur 13, qui, tous les 64 coups d'horloge, fournit pour un couple u, v, la valeur du coefficient F(u,v) correspondant. Le totalisateur 13 comprend un additionneur-soustracteur 15 et un accumulateur 17. L'accumulateur 17 stocke pendant 64 coups d'horloge la somme algébrique des sorties de l'additionneur 15. Cet additionneur reçoit sur une première entrée le résultat partiel accumulé dans l'accumulateur 17 et sur sa deuxième entrée le produit en cours P·f(x,y) affecté du signe (+) ou (-) selon la sortie d'un circuit de détermination de signe 19 qui fournit le produit algébrique de Sgn(x,u) et de Sgn(y,v) obtenu aux sorties des tables 7 et 9.

Avec le circuit de la figure 1, il faut 64 coups d'horloge pour calculer chaque coefficient F(u,v) et donc 64. 64=4096 coups d'horloge pour calculer les 64 coefficients de la DCT d'un bloc. L'élément dont le fonctionnement est le plus lent parmi les circuits de la figure 1 est le multiplieur 11. Une technologie qui autorise qu'une multiplication soit effectuée en une période d'une horloge à 16 MHz permettra une puissance de calcul d'environ 4 kiloblocs par seconde.

D'autre part, pour se faire une idée plus précise de l'encombrement du circuit de la figure 1, on notera que pour un bloc 8·8, le générateur de coordonnées fournit chacune des coordonnées sur 3 bits, et que, si les pixels de la mémoire de blocs sont définis sur 8 bits, pour ne pas perdre en définition, la valeur de P doit être définie sensiblement sur 12 bits.

Dans un deuxième mode de réalisation de la présente invention, on cherche à augmenter la vitesse possible de fourniture des coefficients F(u,v) en utilisant encore un seul multiplieur réalisant l'opération de multiplication d'un nombre de 11 bits par un nombre de 12 bits en un temps d'une horloge à 16 MHz. Pour cela, on se base sur une analyse plus détaillée des coefficients p. Il est alors possible de noter que ces coefficients répondent à la propriété suivante :

Soit x' = 7-x ;

alors :

p(x',u) = + p(x,u) si u est pair
- p(x,u) si u est impair

En utilisant la notation par(u) pour désigner la parité de u, cette expression peut s'écrire

$$p(x',u) = par(u) \cdot p(x,u)$$

où

par(u) = +1 si u est pair
-1 si u est impair.

Ainsi, en reprenant l'expression (1) ci-dessus et en tenant compte de la remarque précédente, on peut écrire :

$$F(u,v)=(1/K)\sum_{x/2}\sum_{y/2} P(u,x,v,y)\ \{f(x,y)+par(u)f(x',y) +par(v)[f(x,y')+par(u)f(x',y')]\} \quad (4)$$

Comme le montre la figure 2, cette expression signifie que, pour quatre pixels deux à deux symétriques par rapport aux axes centraux du tableau de pixels x,y, c'est-à-dire les pixels (x,y) (x',y) (x,y') (x',y'), le coefficient multiplicatif P sera le même sous réserve que les données correspondant aux pixels soient affectées d'un signe positif ou négatif selon leur emplacement. Par contre, la somme double ne porte plus que sur 4x4=16 termes au lieu de 8x8=64 comme cela a été indiqué précédemment. On en tire deux conclusions, d'une part que les dimensions des mémoires 7 et 9 de la figure 1 peuvent être réduites, d'autre part qu'il est possible d'effectuer le calcul d'un coefficient F(u,v) en seulement 16 coups d'horloge au lieu de 64. Ainsi, on multiplie par 4 la rapidité du calcul pour arriver à des rapidités de l'ordre de 16 kblocs/s, c'est-à-dire une rapidité bien suffisante pour le traitement d'informations de visiophone comme cela a été indiqué précédemment.

La figure 3 représente schématiquement un circuit mettant en oeuvre ce deuxième mode de réalisation de la présente invention. Comme le circuit de la figure 1, le circuit de la figure 3 comprend une mémoire de bloc 1, une

mémoire de coefficients P 3, un générateur de données 5, des tables 7 et 9 fournissant respectivement les valeurs n (x,u) et n(y,v) pour l'adressage de la ROM 3 et fournissant aussi les signes de p(x,u) et p(y,v) à un circuit 19 qui fournit le signe de P. La valeur absolue de P est fournie à un multiplieur 11 dont la sortie va à un totalisateur 13 qui fournit cycliquement les valeurs successives F(u,v).

La différence essentielle avec le circuit de la figure 1 est que le générateur de coordonnées 5 adresse simultanément quatre pixels dans la mémoire 1, à savoir les pixels f(x,y), f(x',y), f(x,y') et f(x',y'). Un circuit de sommation 21 fournit la valeur de

$$f(x,y)+par(u)f(x',y)+par(v)[(f(x,y')+par(u)f(x',y')].$$

La sortie du circuit 21 est envoyée à la deuxième entrée du multiplieur 11.

Dans la réalisation décrite, le circuit de sommation 21 comprend trois additionneurs/soustracteurs. Le premier, 23, fournit f(x,y)+par(u)·f(x',y) et reçoit l'entrée par(u) en provenance du générateur de coordonnées 5. De même, le deuxième, 24, fournit f(x,y')+par(u)·f(x',y') et reçoit l'entrée par(u) en provenance du générateur de coordonnées 5. Le troisième, 25, fournit le résultat final et reçoit le signal par(v) du générateur de coordonnées 5.

Dans ce mode de réalisation, pour chaque couple de valeurs u,v, on balayage seulement quatre valeurs de y et quatre valeurs de x ce qui réduit de la façon indiquée précédemment la durée du fonctionnement au coût de l'addition du circuit de sommation 21. Le circuit 21 ne comprenant que des additionneurs est particulièrement simple à réaliser et occupera une faible surface sur un circuit intégré.

Pour aider à la compréhension de la présente invention, la figure 4 représente le tableau des valeurs de n(x,u) et de Sgn(x,u) correspondant à chacune des huit valeurs de u et des quatre valeurs de x balayées (rappelons que n a été défini dans les formules (2) et (3)).

<u>TRANSFORMEE COSINUS DISCRETE INVERSE</u>

La transformée cosinus discrète inverse 8x8 s'écrit :

$$f(x,y)=1/K\sum_{u}\sum_{v} F(u,v)\cdot c(u)\cdot \cos[(2x+1)u\pi/16]\cdot c(v)\cdot \cos[(2y+1)v\pi/16]$$

Cette équation a la même forme que l'équation (1) de détermination de la DCT directe. Ainsi, le circuit de la figure 1 permet sans modification d'effectuer un calcul de DCT inverse, en commutant f(x,y) et F(u,v).

Par contre, le circuit de la figure 3 qui tire partie d'une factorisation du coefficient p n'est pas réversible. Néanmoins, une structure correspondante permettant d'accélérer d'un facteur 4 le fonctionnement du circuit par rapport à celui de la figure 1 peut s'adapter au cas du calcul de la DCT inverse.

En effet, on remarque qu'un même produit

$$F(u,v)\cdot p(x,u)\cdot p(y,v)$$

entre, au signe près, dans le calcul de la somme de 4 pixels. Autrement dit, l'opérateur de transformée cosinus discrète inverse peut calculer simultanément quatre pixels en 64 coups d'horloge pour retrouver les mêmes performances que le calculateur de DCT directe. En notant comme précédemment x'=7-x et y'=7-y, on a les relations (5) ci-dessous :

$$f(x,y) = 1/K \sum_{u}\sum_{v} Sgn(x,u,y,v)\cdot F(u,v)\cdot \left|P(x,u,y,v)\right|$$

$$f(x',y) = 1/K \sum_{u}\sum_{v} par(u)\cdot Sgn(x,u,y,v)\cdot F(u,v)\cdot \left|P(x,u,y,v)\right|$$

$$f(x,y') = 1/K \sum_u \sum_v par(v)\cdot Sgn(x,u,y,v)\cdot F(u,v)\cdot |P(x,u,y,v)|$$

$$f(x',y') = 1/K \sum_u \sum_v par(u)\cdot par(v)\cdot Sgn(x,u,y,v)\cdot F(u,v)\cdot |P(x,u,y,v)|$$

Un circuit permettant de tirer partie de ces relations est illustré en figure 5.

En figure 5, des éléments similaires à ceux des figures précédentes sont désignés par les mêmes références. Ce circuit comprend une mémoire de bloc 1 mais, au lieu d'être des blocs de pixels f(x,y), il s'agit maintenant de blocs de coefficients F(u,v). Comme précédemment, la mémoire morte ROM 3 contient des valeurs de P, c'est-à-dire des valeurs absolues de produits de cosinus de $n\pi/16$, et est associée à un générateur de coordonnées 5 et à des tables de détermination de valeur des termes n(x,u) et n(y,v) 7 et 9. Le multiplieur 11 reçoit directement, d'une part, la valeur F (u,v) en provenance de la mémoire de bloc 1, d'autre part, P en provenance de la ROM 3. Le résultat de la multiplication est envoyé simultanément à quatre totalisateurs 31, 32, 33, 34 pour lesquels le choix entre une addition et une soustraction est déterminé en fonction de la sortie Sgn du circuit 19 et des valeurs des parités de u et de v telles que fournies à la sortie du générateur de coordonnées 5. Les sorties des quatre totalisateurs étant fournies simultanément, elles sont temporairement mémorisées dans des registres 35, 36, 37, 38 avant d'être fournies à une ligne de sortie 40 à un rythme approprié.

Toutefois, les sorties de pixels sur la ligne 40 sont fournies dans un ordre imposé par la satisfaction des équations (5). C'est-à-dire que l'on obtient séquentiellement des pixels correspondant à quatre positions 2 à 2 symétriques par rapport aux axes centraux de la matrice de pixels. Ceci ne correspond généralement pas à un ordre de balayage souhaité de la matrice de pixels. On devra donc parfois disposer un permuteur de sortie 41 destiné à remettre les pixels dans un ordre souhaité sur une sortie 42.

Par ailleurs, en ce qui concerne le calcul de la DCT inverse, on notera que les opérations de DCT sont généralement effectuées dans le but de réaliser ensuite une quantification des coefficients pour ne transmettre que les coefficients de plus grande amplitude. Ainsi, quand on veut faire l'opération de transformation inverse, on se trouve généralement devant des matrices de coefficients F(u,v) dont la plupart des termes sont nuls. On peut donc utiliser divers procédés pour éviter de faire subir un cycle de calcul par un circuit du type de celui de la figure 1 ou de la figure 5 aux coefficients nuls. Ceci peut être réalisé, par exemple, en modifiant la mémoire de blocs et le générateur de coordonnées de la façon suivante.

- La mémoire de blocs devient une mémoire de liste de coefficients. Les coefficients non nuls d'un même bloc y sont stockés à des adresses mémoire successives sous la forme d'une liste de longueur variable. Chaque mot de cette mémoire contient d'une part F(u,v), c'est-à-dire la valeur d'un coefficient, d'autre part les coordonnées u,v de ce coefficient (3 bits chacun), et enfin un bit de fin de liste fb.
- Le générateur de coordonnées continue à délivrer x et y mais par contre, les valeurs de u et v sont fournies par la sortie de la mémoire de blocs. Enfin, la mémoire de blocs doit être adressée de façon à balayer 64 fois (dans le cas de la figure 1) ou seize fois (dans le cas de la figure 5) une liste avant de passer à une liste suivante.

## Revendications

1. Procédé de traitement de données par transformation cosinus discrète (DCT) faisant correspondre à un tableau f(x,y) de NxN données un tableau F(u,v) de NxN coefficients selon la relation suivante :

$$F(u,v) = (1/K) \sum_{x=0}^{N-1} \sum_{y=0}^{N-1} f(x,y)\cdot p(x,u)\cdot p(y,v)$$

où

K est une puissance de 2 constante,
x,y désignent les coordonnées d'une donnée dans le tableau de données,
u,v désignent les coordonnées d'un coefficient dans le tableau de coefficients,

$$p(x,u) = c(u) \cdot \cos[(2x+1)u\pi/2N]$$

$$p(y,v) = c(v) \cdot \cos[(2y+1)v\pi/2N]$$

$c(u), c(v) = 1/\sqrt{2}$ pour $u,v = 0$
$= 1$ pour $u,v \neq 0$,

consistant à déterminer séquentiellement chaque coefficient F(u,v) pour un couple de coordonnées u,v en réalisant les étapes suivantes :

rechercher dans une table pour un premier couple x,y la valeur absolue et le signe du coefficient $P=p(x,u) \cdot p(y,v)$ ; multiplier la valeur absolue de P par f(x,y) ;

introduire le résultat de la multiplication additivement ou soustractivement dans un accumulateur (17) en fonction dudit signe ; et

répéter l'opération pour toutes les valeurs du couple x,y et extraire le résultat fourni par l'accumulateur.

**2.** Procédé de traitement de données selon la revendication 1, caractérisé en ce que l'étape de recherche dans une table se décompose en les étapes suivantes :

rechercher dans une première table adressée par x et u le signe de p(x,u) et le terme n(x,u) (compris entre 1 et N-1), avec :

$$p(x,u) = \mathrm{Sgn}[p(x,u)] \cdot |\cos[n(x,u)\pi/2N]| \ ;$$

rechercher dans une deuxième table adressée par y et v le signe de p(y,v) et le terme n(y,v) (compris entre 1 et N-1), avec :

$$p(y,v) = \mathrm{Sgn}[p(y,v)] \cdot |\cos[n(y,v)\pi/2N]| \ ;$$

et
rechercher dans une troisième table adressée par n(x,u) et n(y,v) la valeur absolue du coefficient P.

**3.** Procédé de traitement de données par transformation cosinus discrète (DCT) selon la revendication 1 comprenant les étapes suivantes :

rechercher dans une table pour quatre couples x,y correspondant à des positions 2 à 2 symétriques par rapport aux axes centraux du tableau de données, la valeur absolue du coefficient $P=p(x,u)p(y,v)$ ;

combiner additivement et/ou soustractivement pour ces quatre couples les valeurs des données correspondantes, le signe de chaque opération étant déterminé en fonction de la position relative des quatre données ;

multiplier la valeur combinée par ladite valeur du coefficient P ;

introduire le résultat de la multiplication dans un accumulateur ; et

répéter l'opération pour toutes les valeurs des couples x,y, x et y variant entre 0 et (N/2)-1.

**4.** Procédé de traitement par transformée cosinus discrète (DCT) selon la revendication comprenant les étapes suivantes :

adresser une case de la mémoire (1) ;

envoyer le contenu de la case à une première entrée d'un multiplieur (11) ;

mémoriser dans une première table (3), pour toutes les valeurs de paramètres n(x,u) et de n(y,v) compris entre 1 et N-1, les valeurs absolues de

$$P=\cos[n(x,u)\pi/2N]\cdot\cos[n(y,v)\pi/2N] ;$$

mémoriser dans des deuxièmes tables (7, 9) les valeurs du signe des fonctions cosinus en fonction des valeurs de u et de x d'une part, de v et de y d'autre part ainsi que les valeurs de n(x,u) et de n(y,v) et utiliser ces valeurs pour adresser la première table ;
multiplier à chaque temps d'horloge une valeur d'une case du bloc de données par une valeur de la première table ; et
cumuler le résultat des multiplications additivement ou soustractivement en fonction des signes déterminés par les deuxièmes tables pour toutes les valeurs de x et de y.

5. Circuit de traitement de données par transformée cosinus discrète faisant correspondre à un tableau f(x,y) de NxN données un tableau F(u,v) de NxN coefficients, selon la relation suivante :

$$F(u,v) = (1/K) \sum_{x=0}^{N-1} \sum_{y=0}^{N-1} f(x,y)\ p(x,u)\ p(y,v)$$

où

K est une puissance de 2 constante,
x,y désignent les coordonnées d'une donnée dans le tableau de données,
u,v les coordonnées d'un coefficient dans le tableau de coefficients,

$$p(x,u) = c(u)\cdot\cos[(2x+1)u\pi/2N]$$

$$p(y,v) = c(v)\cdot\cos[(2y+1)v\pi/2N]$$

$$c(u), c(v) = 1/\sqrt{2} \text{ pour } u,v = 0$$
$$= 1 \text{ pour } u,v \neq 0,$$

caractérisé en ce qu'il comprend

une mémoire (1) du tableau de données ;
une mémoire (3) des produits

$$P = |\cos[n(x,u)\pi/2N]\cos[n(y,v)\pi/2N]| ;$$

avec :

$$p(x,u) = Sgn[p(x,u)]\cdot|\cos[n(x,u)\pi/2N]|,$$

$$p(y,v) = Sgn[p(y,v)]\cdot|\cos[n(y,v)\pi/2N]|,$$

où n(x,u) et n(y,v) sont des entiers compris entre 1 et N-1 ;
une table (7, 9, 19) des signes de p(x,u) et p(y,v) et des valeurs de n(x,u) et de n(y,v) adressant la mémoire (3) des produits ;
un générateur de coordonnées (5) fournissant séquentiellement des couples de valeur (u,v) et, pour chaque couple (u,v), toutes les valeurs des couples (x,y) ;
un multiplieur (11) effectuant le produit de P par une combinaison des données de la mémoire de données ; et
un totaliseur (13) effectuant une soustraction ou une addition du résultat de la multiplication avec les résultats

précédents en fonction du signe fourni par la table de signes.

**6.** Circuit selon la revendication 5, caractérisé en ce que ladite combinaison correspond à une valeur de données f (x,y).

**7.** Circuit selon la revendication 5, caractérisé en ce que ladite combinaison correspond à

$$\{f(x,y)+par(u)f(x',y)+par(v)[f(x,y')+par(u)f(x',y')]\},$$

où

x' = N-1-x,
y' = N-1-y,
par(u) et par(v) = +1 ou -1, selon que u ou v est pair ou impair.

**8.** Circuit selon la revendication 7, caractérisé en ce que ladite combinaison est fournie par un circuit (21) comprenant un premier additionneur/soustracteur (23) recevant f(x,y), f(x'y) et par(u) et fournissant f(x,y)+par(u)f(x'y), un deuxième additionneur/soustracteur (24) recevant f(x,y'),f(x',y') et par(u) et fournissant f(x,y')+par(u)f(x',y'), et un troisième additionneur/soustracteur (25) recevant les sorties des deux premiers additionneurs et fournissant le résultat du premier plus le résultat du deuxième multiplié par par(v).

**9.** Circuit de traitement de coefficients par transformée cosinus discrète inverse faisant correspondre à un tableau de NxN coefficients (F(u,v)) un tableau de NxN données (f(x,y)) selon la relation suivante :

$$f(x,y)=1/K\sum_{u}\sum_{v} F(u,v)\cdot c(u)\cdot \cos[(2x+1)u\pi/16]\cdot c(v)\cdot \cos[(2y+1)v\pi/16]$$

où

K est une puissance de 2 constante,
x,y désignent les coordonnées d'une donnée dans le tableau de données,
u,v les coordonnées d'un coefficient dans le tableau de coefficients,
c(u), c(v) = 1/√2 pour u,v = 0
= 1 pour u,v ≠ 0,

caractérisé en ce qu'il comprend :

une mémoire (1) du tableau de coefficients ;
une mémoire (3) des produits

$$P = \cos[n(x,u)\pi/2N]\cdot\cos[n(y,v)\pi/2N],$$

où n(x,u) et n(y,v) sont des entiers compris entre 1 et (N/2)-1;
une table (7, 9, 19) des signes de cos[n(x,u)π/2N] et de cos[n(y,v)π/2N], et de n(x,u) et de n(y,v) ;
un générateur de coordonnées (5) fournissant séquentiellement des couples de valeurs (x,y) correspondant au 1er quadrant du tableau de données ainsi que des signaux par(u) et par(v) égaux à +1 ou -1 selon que u et v sont pair ou impair et, pour chaque couple (x,y), toutes les valeurs des couples (u,v) ;
un multiplier (11) effectuant le produit de P par une combinaison de coefficients de la mémoire des coefficients ; et
quatre totaliseurs (13) effectuant une soustraction ou une addition du résultat de la multiplication avec les résultats précédents en fonction du signe fourni par la table de signas et des valeurs de par(u) et de par(v) pour fournir respectivement f(x,y), f(x',y), f(x,y') et f(x',y') où :
x' = N-1-x
y' = N-1-y.

**10.** Circuit selon la revendication 9, caractérisé en ce que la mémoire (1) du tableau de coefficients contient seulement des coefficients non nuls, chaque mot de la mémoire contenant une valeur de coefficient non nul suivie des coordonnées u, v de ce coefficient.

## Patentansprüche

**1.** Verfahren zur Datenverarbeitung mittels diskreter Cosinus-Transformation (DCT), welche eine Entsprechung zwischen einer Tabelle f(x,y) von NxN Daten und einer Tabelle F(u,v) von NxN Koeffizienten gemäß der folgenden Beziehung herstellt:

$$F(u,v) = (1/K) \sum_{x=0}^{N-1} \sum_{y=0}^{N-1} f(x,y).p(x,u).p(y,v)$$

worin

K eine konstante Zweierpotenz ist,
x,y die Koordinaten eines Datums in der Datentabelle bezeichnen,
u,v die Koordinaten eines Koeffizienten in der Koeffiziententabelle bedeuten,

$$p(x,u) = c(u).\cos[(2x+1)u\pi/2N]$$

$$p(y,v) = c(v).\cos[(2y+1)v\pi/2N]$$

$c(u), c(v) = 1/\sqrt{2}$ für $u,v = 0$
$= 1$ für $u,v \neq 0$ wobei das Verfahren in der sequentiellen Bestimmung jeweils jedes Koeffizienten F(u,v) für ein Koordinatenpaar u,v mittels Durchführung der folgenden Schritte besteht:

- in einer Tabelle werden für ein erstes Koordinatenpaar x,y der Absolutbetrag und das Vorzeichen des Koeffizienten P=p(x,u).p(y,v) aufgesucht;
- der Absolutbetrag von P wird mit f(x,y) multipliziert;
- das Ergebnis der Multiplikation wird in Abhängigkeit von dem genannten Vorzeichen additiv oder substraktiv in einen Akkumulator (17) eingeführt; und
- die Operation wird für sämtliche Werte des Koordinatenpaars x,y wiederholt und das von dem Akkumulator gelieferte Ergebnis extrahiert bzw. abgefragt.

**2.** Verfahren zur Datenverarbeitung nach Anspruch 1, dadurch gekennzeichnet, daß der Verfahrensschritt des Aufsuchens in einer Tabelle sich in die folgenden Schritte aufgliedert:

- in einer mittels x und u adressierten ersten Tabelle werden das Vorzeichen von p(x,u) und der Term n(x,u) (im Bereich zwischen 1 und N-1) aufgesucht, wobei:

$$p(x,u) = \mathrm{Sgn}[p(x,u)].|\cos[n(x,u)\pi/2N]|;$$

- in einer mittels y und v adressierten zweiten Tabelle werden das Vorzeichen von p(y,v) und der Term n(y,v) (im Bereich zwischen 1 und N-1) aufgesucht, wobei:

$$p(y,v) = Sgn[p(y,v)].|cos[n(y,v)\pi/2N]|;$$

und

- in einer mittels n(x,u) und n(y,v) adressierten dritten Tabelle wird der Absolutwert des Koeffizienten P aufgesucht.

**3.** Verfahren zur Datenverarbeitung mittels diskreter Cosinus-Transformation (DCT) nach Anspruch 1, welches die folgenden Schritte umfaßt:

- in einer Tabelle wird für vier Koordinatenpaare x,y entsprechend den paarweise bezüglich den Mittelachsen der Datentabelle symmetrischen Stellungen der Absolutbetrag des Koeffizienten P=p(x,u)p(y,v) aufgesucht;
- für diese vier Koordinatenpaare werden die Werte der entsprechenden Daten additiv und/oder substraktiv kombiniert, wobei das Vorzeichen jeder Operation in Abhängigkeit von der relativen Stellung der vier Daten bestimmt wird;
- der kombinierte Wert wird mit dem genannten Wert des Koeffizienten P multipliziert;
- das Resultat der Multiplikation wird in einen Akkumulator eingeführt; und
- die Operation wird für sämtliche Werte des Koordinatenpaars x,y wiederholt, wobei x und y im Bereich zwischen 0 und (N/2)-1 variieren.

**4.** Verfahren zur Datenverarbeitung mittels diskreter Cosinus-Transformation (DCT) nach Anspruch 1, wobei das Verfahren die folgenden Schritte umfaßt:

- es wird ein Speicherplatz bzw. eine Speicherzelle des Speichers (1) adressiert;
- der Inhalt des Speicherplatzes wird an einen ersten Eingang eines Multiplikators (11) zugeführt;
- in einer ersten Tabelle (3) werden für sämtliche Parameterwerte n(x,u) und n(y,v) im Bereich zwischen 1 und N-1 die Absolutbeträge von

$$P=cos[n(x,u)\pi/2N].cos[n(y,v)\pi/2N]$$

gespeichert;

- in zweiten Tabellen (7, 9) werden die Werte des Vorzeichens der Cosinus-Funktionen in Abhängigkeit von den Werten von u und von x einerseits und von v und y andererseits sowie die Werte von n(x,u) und von n(y,v) gespeichert und diese Werte zur Adressierung der ersten Tabelle verwendet;
- für jeden Taktimpuls wird ein Wert eines Speicherplatzes bzw. einer Speicherzelle des Datenblocks mit einem Wert aus der ersten Tabelle multipliziert; sowie
- das Ergebnis der Multiplikationen wird in Abhängigkeit von dem durch die zweiten Tabellen für sämtliche Werte von x und von y bestimmten Vorzeichen additiv oder subtraktiv kumuliert.

**5.** Schaltung zur Datenverarbeitung mittels diskreter Cosinus-Transformierter, welche eine Entsprechung zwischen einer Tabelle f(x,y) von NxN Daten mit einer Tabelle F(u,v) von NxN Koeffizienten herstellen gemäß der folgenden Beziehung:

$$F(u,v) = (1/K) \sum_{x=0}^{N-1} \sum_{y=0}^{N-1} f(x,y)\, \bar{p}(x,u)\, p(y,v)$$

worin

K eine konstante Zweierpotenz bedeutet,
x,y die Koordinaten eines Datums in der Datentabelle bezeichnen,
u,v die Koordinaten eines Koeffizienten in der Koeffiziententabelle sind,

$$p(x,u) = c(u).\cos[(2x+1)u\pi/2N]$$

$$p(y,v) = c(v).\cos[(2y+1)v\pi/2N]$$

$c(u), c(v) = 1/\sqrt{2}$ für u,v = 0
$= 1$ für $u,v \neq 0$, dadurch gekennzeichnet, daß die Schaltung umfaßt:

- einen Speicher (1) der Datentabelle;
- einen Speicher (3) für die Produkte

$$P = |\cos[n(x,u)\pi/2N]\cos[n(y,v)\pi/2N]|;$$

mit:

$$p(x,u) = Sgn[p(x,u)].|\cos[n(x,u)\pi/2N]|,$$

$$p(y,v) = Sgn[p(y,v)].|\cos[n(y,v)\pi/2N]|,$$

wobei n(x,u) und n(y,v) ganze Zahlen im Bereich zwischen 1 und N-1 sind;

- eine Tabelle (7, 9, 19) der Vorzeichen von p(x,u) und p(y,v) und der den Speicher (3) der Produkte adressierenden Werte von n(x,u) und n(y,v);
- einen Koordinatengenerator (5), der sequentiell Wertepaare (u,v) und, für jedes Wertepaar (u,v), sämtliche Werte der Paare (x,y) liefert;
- einen Multiplikator (11) zur Bildung des Produkts aus P mit einer Kombination der Daten des Datenspeichers; sowie
- einen Totalisator (13), der eine Subtraktion oder eine Addition des Ergebnisses der Multiplikation mit den vorhergehenden Ergebnissen durchführt, in Abhängigkeit von dem von der Vorzeichentabelle gelieferten Vorzeichen.

**6.** Schaltung nach Anspruch 5,
dadurch gekennzeichnet, daß die genannte Kombination einem Wert der Daten f(x,y) entspricht.

**7.** Schaltung nach Anspruch 5,
dadurch gekennzeichnet, daß die genannte Kombination dem Ausdruck

{f(x,y)+par(u)f(x',y)+par(v)[f(x,y')+par(u)f(x',y')]},

entspricht, worin
x' = N-1-x,
y' = N-1-y,
par(u) und par(v) = +1 oder -1, je nachdem, ob u oder v gerade oder ungerade sind.

**8.** Schaltung nach Anspruch 7,
dadurch gekennzeichnet, daß die genannte Kombination von einer Schaltung (21) gebildet wird, welche einen ersten Addierer/Subtrahierer (23) aufweist, welchem f(x,y), f(x',y) und par(u) zugeführt wird und welcher die Größe f(x,y)+ +par(u)f(x',y) liefert, des weiteren einen zweiten Addierer/Subtrahierer (24), welchem f(x,y'),f(x',y') und par (u) zugeführt werden und der f(x,y')+par(u)f(x',y') bildet, sowie einen dritten Addierer/Subtrahierer (25), welchem die Ausgangsgrößen der beiden ersten Addierer zugeführt werden und der die Summe aus dem Resultat des ersten Addierers und dem Resultat des zweiten Addierers multipliziert mit par(v) bildet.

**9.** Schaltung zur Verarbeitung von Koeffizienten mittels inverser diskreter Cosinus-Transformation, durch welche eine Entsprechung zwischen einer Tabelle von NxN Koeffizienten (F(u,v)) und einer Tabelle von NxN Daten (f(x, y)) gemäß der folgenden Beziehung hergestellt wird:

$$f(x,y)=1/K \sum_{u} \sum_{v} F(u,v).c(u).\cos[(2x+1)u\pi/16].$$
$$.c(v).\cos[(2y+1(v\pi/16]$$

worin

K eine konstante Potenz von 2 ist,
x,y die Koordinaten eines Datums in der Datentabelle darstellen,
u,v die Koordinaten eines Koeffizienten in der Koeffiziententabelle sind,

c(u), c(v) = $1/\sqrt{2}$ für u,v = 0
= 1 für u,v $\neq$ 0, dadurch gekennzeichnet, daß die Schaltung umfaßt:

- einen Speicher (1) für die Koeffiziententabelle;
- einen Speicher (3) der Produkte

$$P = \cos[n(x,u)\pi/2N].\cos[n(y,v)\pi/2N],$$

worin n(x,u) und n(y,v) ganze Zahlen zwischen 1 und (N/2)-1 sind;

- eine Tabelle (7, 9, 19) der Vorzeichen von cos[n(x,u)$\pi$/2N], von cos[n(y,v)$\pi$/2N], sowie von n(x,u) und von n(y,v);
- einen Koordinatengenerator (5), welcher sequentiell dem ersten Quadranten der Datentabelle entsprechende Wertepaare (x,y) liefert sowie Signale par(u) und par(v) gleich +1 oder -1, je nachdem u und v gerade oder ungerade sind, sowie für jedes Wertepaar (x,y) sämtliche Werte der Wertepaare (u,v);
- einen Multiplikator (11) zur Bildung des Produkts aus P mit einer Kombination von Koeffizienten aus dem Koeffizientenspeicher; sowie
- vier Totalisatoren (13), welche eine Subtraktion oder Addition des Resultats der Multiplikation von bzw. mit den vorhergehenden Resultaten vornehmen, in Abhängigkeit von dem aus der Vorzeichentabelle gelieferten Vorzeichen und von den Werten von par(u) und par(v), zur Bildung von f(x,y), f(x',y), f(x,y') bzw. f(x',y'), worin:
x' = N-1-x

$y' = N-1-y$.

**10.** Schaltung nach Anspruch 9,
dadurch gekennzeichnet, daß der Speicher (1) der Koeffiziententabelle lediglich die von Null verschiedenen Koeffizienten erhält, wobei jedes Wort des Speichers einen von Null verschiedenen Koeffizientenwert, gefolgt von den Koordinaten u,v dieses Koeffizienten, enthält.

## Claims

**1.** A data processing method through discrete cosine transform (DCT) making the correspondence between a table f(x,y) of NxN data and a table F(u,v) of NxN coefficients according to the following relation:

$$F(u,v) = (1/K) \sum_{x=0}^{N-1} \sum_{y=0}^{N-1} f(x,y).p(x,u).p(y,v)$$

where

K is a constant power of 2,
x,y designate the coordinates of a datum in the data table,
u,v designate the coordinates of a coefficient in the coefficient table,

$$p(x,u) = c(u).\cos[(2x+1)u\pi/2N]$$

$$p(y,v) = c(v).\cos[(2y+1)v\pi/2N]$$

$c(u), c(v) = 1/\sqrt{2}$ for $u,v = 0$
$= 1$ for u,v 0,

consisting in sequentially determining each coefficient F(u,v) for a couple of coordinates u,v by achieving the following steps:
for a first couple x,y searching in a table for the absolute value and the sign of coefficient $P=p(x,u).p(y,v)$;
multiplying the absolute value of P by f(x,y);
introducing the result of the multiplication in an accumulator (17) by addition or subtraction as a function of said sign; and
resuming the operation for all the values of the couple x,y and extracting the result provided by the accumulator.

**2.** A data processing method according to claim 1, wherein the searching step is achieved as follows:

searching in a first table addressed by x and u for the sign of p(x,u) and a term n(x,u) (ranging from 1 to N-1), with:

$$p(x,u) = Sgn[p(x,u)].|\cos[n(x,u)\pi/2N]|;$$

searching in a second table addressed by y and v for the sign of p(y,v) and term n(y,v) (ranging from 1 to N-1), with

$$p(y,v) = Sgn[p(y,v)].|\cos[n(y,v)\pi/2N]|;$$

and

searching in a third table addressed by n(x,u) and n(y,v) for the absolute value of coefficient P.

**3.** A data processing method through discrete cosine transform (DCT) according to claim 1, comprising the following steps:

for four couples x,y corresponding to positions arranged by pair of values, symmetrical with respect to central axes of the data table, searching in a table for the absolute value of coefficient P=p(x,u).p(y,v);
combining by addition and/or subtraction for these four couples the values of the corresponding data, the sign of each operation being determined as a function of the relative position of the four data;
multiplying the combined value by said value of coefficient P;
introducing the result of said multiplication into an accumulator; and
resuming the above steps for all the values of couples x,y, x and y ranging from 0 to (N/2)-1.

**4.** A DCT method according to claim 1, comprising the following steps:

addressing a case of the memory (1);
providing the content of said case to a first input of a multiplier (11);
storing in a first table (3), for all the values of the parameters n(x,u) and n(y,v) ranging from 1 and N-1, the absolute values of

$$P = \cos[n(x,u)\text{Ð}/2N].\cos[n(y,v)\text{Ð}/2N];$$

storing in second tables (7,9) the values of the sign of the cosine functions as a function of the values of u and x, on the one hand and, v and y, on the other, as well as the values of n(x,u) and n(y,v) and using said values for addressing said first table;
multiplying at each clock pulse a value of a case of the data block by a value of the said table; and
cumulating the result of the multiplications by addition or subtraction as a function of the signs determined by the second tables for all the values of x and y.

**5.** A DCT data processing circuit making the correspondence between a table f(x,y) of NxN data and a table F(u,v) of NxN coefficients according to the following relation:

$$F(u,v) = (1/K) \underset{x=0}{\overset{N-1}{\text{ð}}} \underset{y=0}{\overset{N-1}{\text{ð}}} f(x,y).p(x,u).p(y,v)$$

where

K is a constant power of 2,
x,y designate the coordinates of a datum in the data table,
u,v designate the coordinates of a coefficient in the coefficient table,

$$p(x,u) = c(u).\cos[(2x+1)u\text{Ð}/2N]$$

$$p(y,v) = c(v).\cos[(2y+1)v\text{Ð}/2N]$$

c(u), c(v) = 1 $\sqrt{2}$ for u,v = 0
= 1 for u,v = 0,

characterized in that it comprises:

a data table memory (1);
a memory (3) of products

P = °cos[n(x,u)Ð/2N].cos[n(y,v)Ð/2N]°;

with:

p(x,u) = Sgn[p(x,u)].°cos[n(x,u)Ð/2N]°,

p(y,v) = Sgn[p(y,v)].°cos[n(y,v)Ð/2N],°

where n(x,u) and n(y,v) are integers ranging from 1 to N-1.;
a table (7, 9, 19) of the signs of p(x,u) and p(y,v) and values of n(x,u) and n(y,v) addressing said product memory (3);
a coordinate generator (5) sequentially providing value couples (u,v) and, for each couple (u,v), all the values of couples (x,y);
a multiplier (11) calculating the product of P by a combination of data from the data memory; and
a totalizer (13) subtracting from or adding to the result of the multiplication the previous results as a function of the sign provided by the sign table.

**6.** A circuit according to claim 5, characterized in that said combination corresponds to a data value f(x,y).

**7.** A circuit according to claim 5, characterized in that said combination corresponds to

{f(x,y)+par(u)f(x',y)+par(v)[f(x,y')+par(u)f(x',y')]},

where
x' = N-1-x,
y' = N-1-y,
par(u) and par(v) = +1 or -1 depending on whether u or v is an even or odd number.

**8.** A circuit according to claim 7, characterized in that said combination is provided by a circuit (21) comprising a first adder/subtracter (23) receiving f(x,y), f(x',y) and par(u) and providing f(x,y)+par(u)f(x',y), a second adder/subtracter (24) receiving f(x,y'), f(x',y') and par(u) and providing f(x,y')+par(u)f(x',y') and a third adder/subtracter (25) receiving the outputs of said first two adders and providing the result of the first plus the result of the second multiplied by par(v).

**9.** A circuit for processing data through a reverse discrete cosine transform making the correspondence between a table of NxN coefficients (F(u,v)) and a table of NxN data (f(x,y)) according to the following relation:

f(x,y) = (1/K) ð ð F(u,v).c(u).cos[(2x+1)uÐ/16]
u v .c(v).cos[(2y+1)vÐ/16]

where

K is a constant power of 2,
x,y designate the coordinates of a datum in the data table,
u,v designate the coordinates of a coefficient in the coefficient table,
c(u), c(v) = 1/ $\sqrt{2}$ for u,v = 0
= 1 for u,v = 0.

Characterized in that it comprises:

a memory (1) of the coefficient table;
a memory (3) of products

$$P = \cos[n(x,u)\pi/2N].\cos[n(y,v)\pi/2N],$$

where n(x,u) and n(y,v) are integers ranging from 1 to (N/2)-1;
a table (7, 9, 19) of the signs of $\cos[n(x,u)\pi/2N]$ and $\cos[n(y,v)\pi/2N]$ and of n(x,u) and n(y,v);
a coordinate generator (5) sequentially providing couples of values (x,y) corresponding to the first quadrant of the data table as well as signals par(u) and par(v) equal to +1 or -1 depending on whether u and v are even or odd and, for each couple (x,y), all the values of couples (u,v);
a multiplier (11) calculating the product of P by a coefficient combination of the coefficient memory; and
four totalizers (13) subtracting or adding the result of the multiplication from or to the previous results as a function of the sign provided by said sign table and of the values of par(u) and par(v) for respectively providing f(x,y), f(x',y), f(x,y') and f(x',y') where:

x'=N-1-x
y'=N-1-y.

**10.** A circuit according to claim 9, characterized in that said coefficient table memory (1) contains non-null coefficients only, each word of said memory containing a non-null coefficient value followed by coordinates u, v of said coefficient.

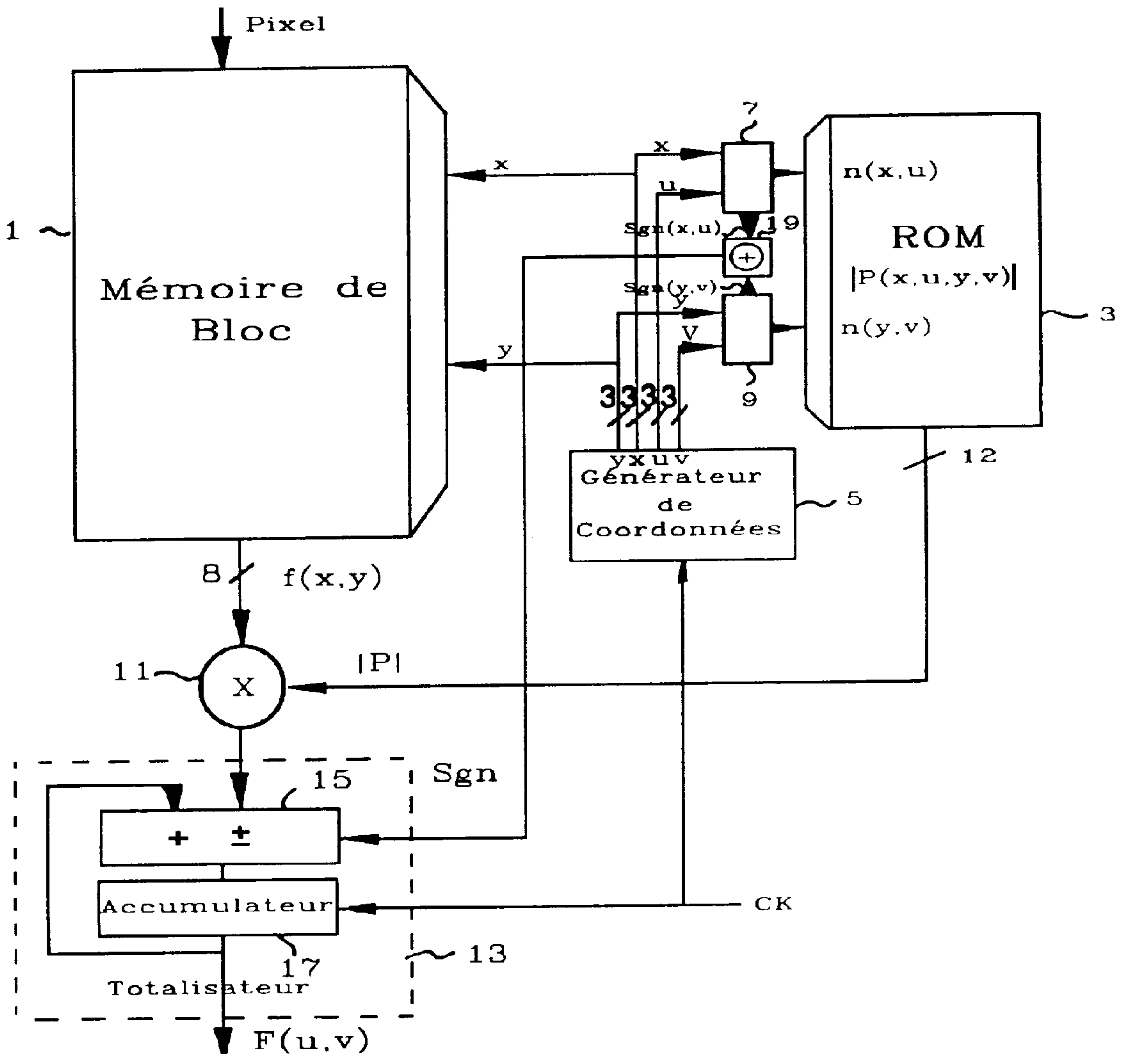
Pixel
Mémoire de Bloc
1
x
y
x
u
Sgn(x,u)
19
Sgn(y,v)
y
v
7
9
n(x,u)
ROM
|P(x,u,y,v)|
n(y,v)
3
3 3 3 3
y x u v
Générateur de Coordonnées
5
12
8
f(x,y)
11
X
|P|
Sgn
15
+ ±
Accumulateur
CK
17
13
Totalisateur
F(u,v)

Fig. 1

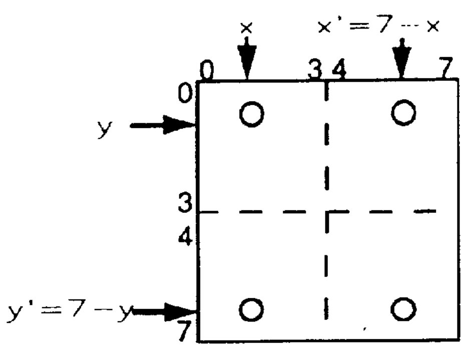
x
x' = 7 - x
0
3 4
7
0
y
3
4
y' = 7 - y
7

Fig. 2

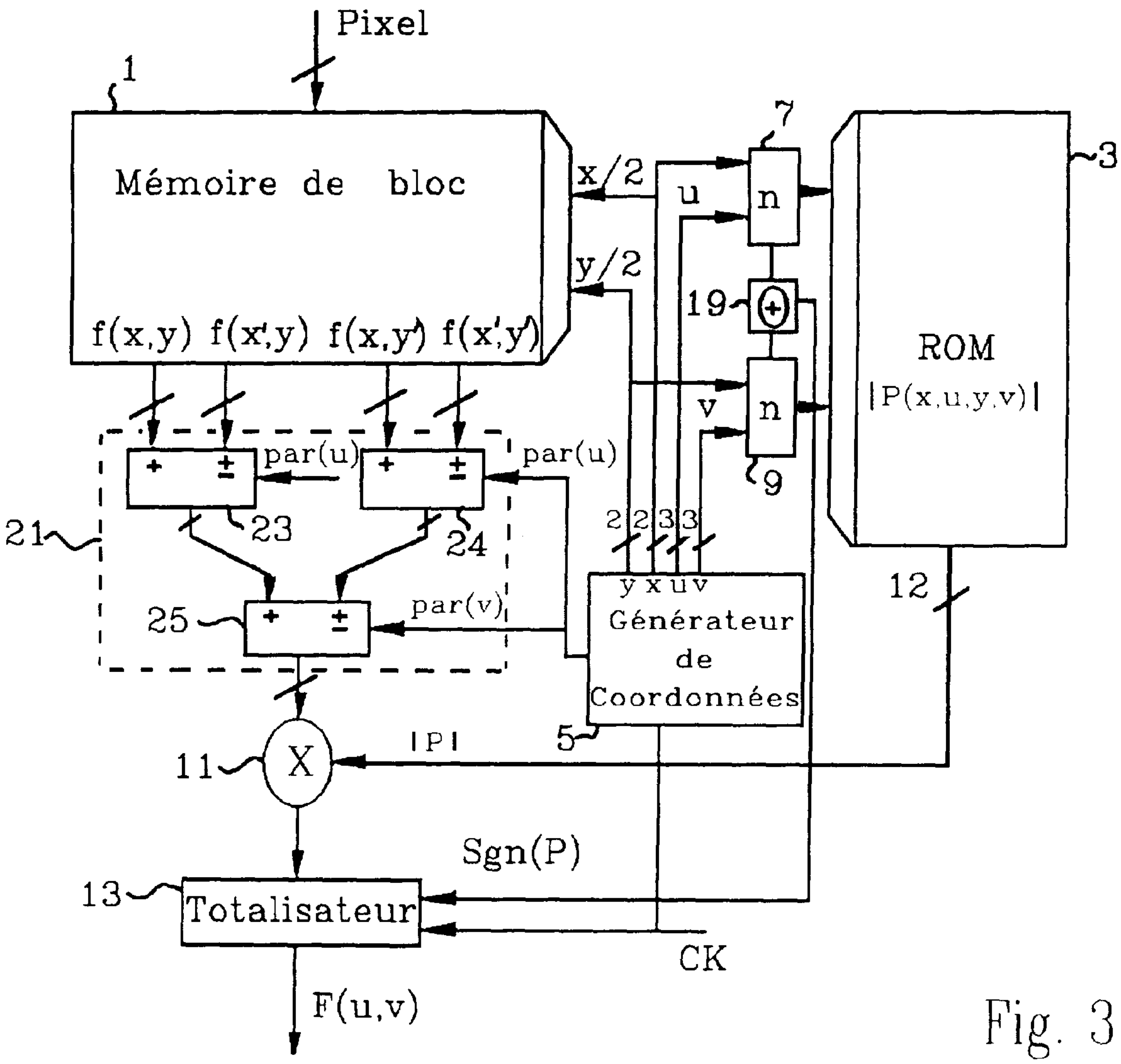


Fig. 3

| x \ u | 0 | 1 | 2 | 3 | 4 | 5 | 6 | 7 |
|---|---|---|---|---|---|---|---|---|
| 0 | 4+ | 1+ | 2+ | 3+ | 4+ | 5+ | 6+ | 7+ |
| 1 | 4+ | 3+ | 6+ | 7- | 4- | 1- | 2- | 5- |
| 2 | 4+ | 5+ | 6- | 1- | 4- | 7+ | 2+ | 3+ |
| 3 | 4+ | 7+ | 2- | 5- | 4+ | 3+ | 6- | 1- |

Fig. 4

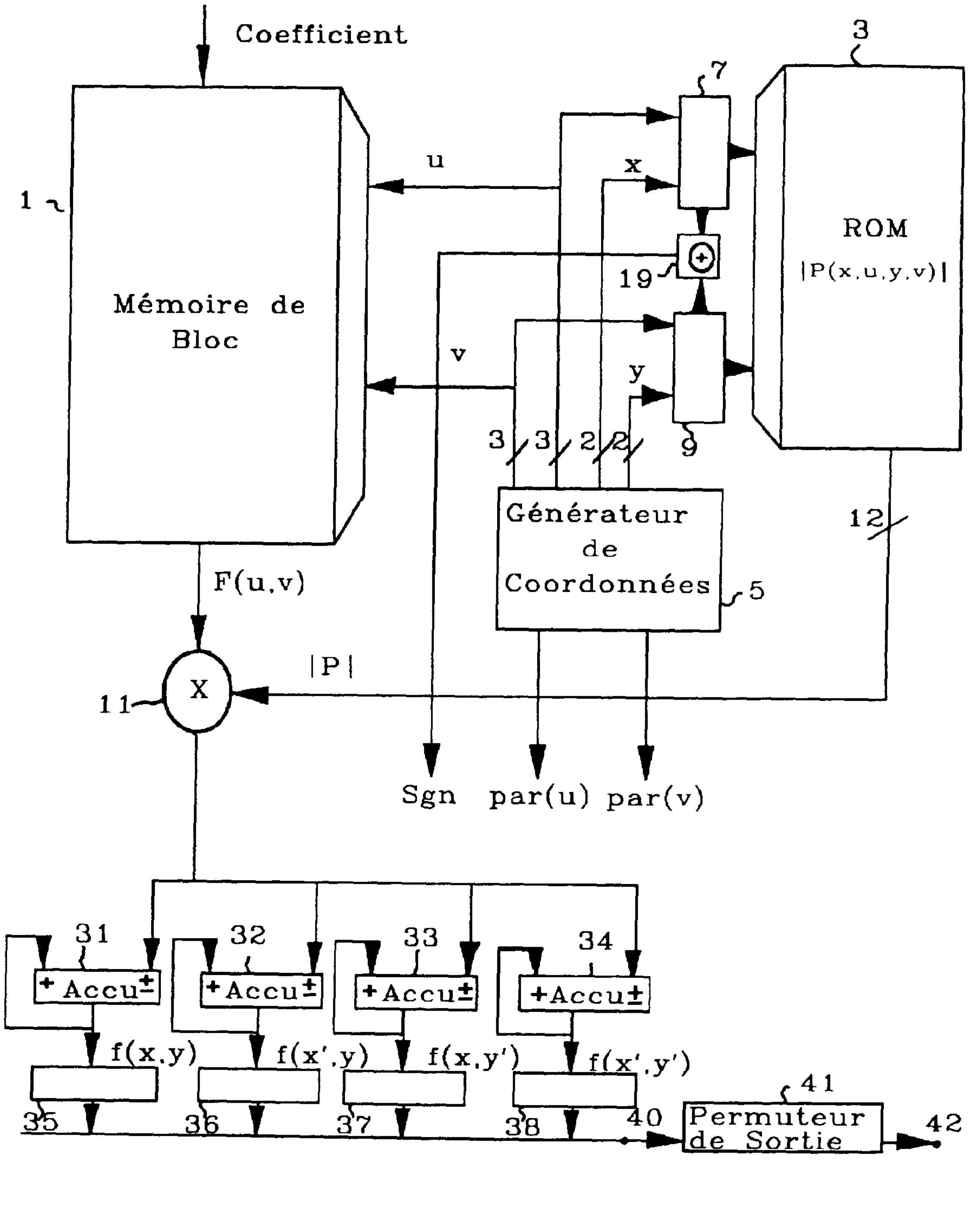
Coefficient
3
7
1
Mémoire de
Bloc
u
x
ROM
|P(x,u,y,v)|
19
v
y
3
3
2
2
9
Générateur
de
Coordonnées
5
12
F(u,v)
|P|
X
11
Sgn
par(u)
par(v)
31
32
33
34
+ Accu ±
+ Accu ±
+ Accu ±
+ Accu ±
f(x,y)
f(x',y)
f(x,y')
f(x',y')
35
36
37
38
40
41
Permuteur
de Sortie
42

FIG. 5